# EUROPEAN PATENT APPLICATION

(11) **EP 1 792 544 A1**
(43) Date of publication of application: **06.06.2007**
(21) Application number: 05077737.4
(22) Date of filing: 30.11.2005
(51) Int. Cl.: A23L 1/30, A23L 1/304, A23L 1/05

(54) **Zinc fortified food product and additive**

(71) Applicant: UNILEVER N.V., 3013 AL Rotterdam (NL)
(72) Inventor: Marshman, Clive Edward, Cambs PE29 1LQ (GB); Velikov, Krassimir Petkow c/o Unilever R&D Vlaard., 3133 AT Vlaardingen (NL)
(74) Representative: Kan, Jacob Hendrik

(57) **Abstract**

There is provided a food product which has been fortified in zinc content, having an zinc content of at least 5 ppm and comprising zinc- containing nanoparticles, wherein the nanoparticles are stabilised by means of a biopolymer to provide good physical stability and bioavailability.

## Description

### FIELD OF THE INVENTION

The invention generally relates to the field of fortified food products. More in particular, it relates to the fortification of a food product with zinc. The invention also relates to an additive for the fortification and supplementation of food and other products with zinc and to a method of preparing the same.

### BACKGROUND TO THE INVENTION

Zinc is an essential trace element in all forms of life. It plays important roles in growth and development, the immune response, neurological function, and reproduction of humans and animals. Numerous aspects of cellular metabolism are zinc-dependent. On the cellular level, zinc has a catalytic role, a structural role and a regulatory role.

In humans, mild zinc deficiency contributes to a number of health problems, especially common in children who live in developing countries. For example, it has been demonstrated that mild zinc deficiency contributes to impaired physical and neuropsychological development and increased susceptibility to life-threatening infections in young children. Zinc deficiency can slow down growth rate in children. Individuals at risk of zinc deficiency are in particular infants and children, pregnant and lactating (breastfeeding) women, especially teenagers, patients receiving total parenteral nutrition (intravenous feedings), malnourished individuals, including those with protein-energy malnutrition and anorexia nervosa, older adults (65 years and older) and individuals with alcoholic liver disease which have increased urinary zinc excretion and low liver zinc levels. Furthermore, in strict vegetarians the requirement for dietary zinc may be as much as fifty percent greater for strict vegetarians whose major food staples are grains and legumes because high levels of phytic acid in these foods reduce the absorption of zinc. The potential health benefit of using Zn supplements is improvement of the immune function.

Since the human body does not produce minerals, it is totally dependent on an external supply of zinc, either nutritional or supplementary. The importance of adequate zinc intake is recognized during the whole life of the human being. The recommended daily allowance for zinc intake is from 2 to 13 mg per day, and is dependent on age and sex.

In general, water-soluble minerals used for supplements are likely to impair the stability of a food product. Hence, it cannot contain more than a certain amount of such water-soluble minerals. This also restricts their use as mineral supplements. Moreover, the peculiar bitter or astringency taste is also a problem for many food formats. In addition, multivalent metal ions such as zinc can react with several proteins and polysaccharides causing precipitation and change in texture.

In general, water-insoluble minerals affect the stability and taste of the product less and higher amounts can be added. However, the high specific gravity of minerals (generally as high as 1.5 or higher) causes them to sediment in a short time when dispersed in a liquid product such as milk, so that the stability and the appearance of food is adversely affected. Thus, the amount that can be added is still limited.

Zinc in the form of a water-soluble salt or complex can be added to food and/or beverages to provide the daily allowance. The main problems caused by zinc sources added to food and beverages are the susceptibility to light and physical instability. Moreover, the addition of zinc to beverages, especially to plant protein or polyphenols containing drinks and beverages can be very difficult. If highly or slightly soluble sources of zinc are used, interaction between the zinc and zinc sensitive ingredients, such as proteins, occurs. Thus, the addition of zinc chloride or other soluble zinc salts such as zinc sulfate, zinc chloride, zinc lactate, zinc citrate etc., cause drastic physical instabilities in plan protein containing liquid, semi-liquid products or solid products after mixing with water or other liquid products containing water.

As alternatives to the soluble sources of zinc, which are highly bioavailable but lead to an undesirable flavor and/or color, insoluble zinc sources such as zinc carbonate, zinc phosphate, etc. may be used. These forms of zinc cause little chemical instabilities, but when added to drinks and liquid beverages they may cause severe sedimentation, which could make the mineral not available to the consumer because it remains in the package, or lead to loss of transparency, if it is added to clear products, or color change if added to colored products.

Finally, the efficiency of the uptake of zinc from food fortified with large particles of water-insoluble zinc salts, the bioavailability and bioacessability, remains a problem due to slow dissolution rate of the mineral.

Finally, the use of mineral supplements in form of insoluble large particles can cause abrasion and severe damage of mixing and processing equipment.

So far, few attempts have been made to simultaneously address these very complex issues. For example, EP-B-870 435 (Taiyo Kagaku) discloses a mineral-containing composition having improved dispersion stability and comprising enzymatically decomposed lecithin and water-insoluble mineral, preferably ferric pyrophosphate. The use of enzymatically decomposed lecithin is essential for achieving the desired dispersion stability. A major drawback of these compositions is that the emulsifier lecithin has to be present. It is known that lecithin has not very pleasant taste. In addition, the use of emulsifier makes the product particularly costly and not appealing to the consumer.

Products containing lecithin are "Generally Recognised As Safe" (GRAS) under 21 CFR 184.1400 and specifications of the Food Chemicals Codex. Lecithin products that have been modified sometimes require special labelling. For example, when enzymatically modified, the phrase "Enzymatically Modified Lecithin" should appear on labelling. Finally, lecithin is known to vary significantly in quality from batch to batch causing extra difficulties in food processing.

In many cases the unnecessary use of emulsifiers is not desirable. Therefore, it is desirable to develop a nutritional additive that fulfils the above-mentioned requirements for stability without the necessity of using enzymatically-decomposed lecithin.

It is therefore an object of the present invention to provide a zinc fortified food product and zinc-containing additive, which overcomes one or more of the above mentioned drawbacks. Surprisingly, it has now been found that this object can be achieved by the food product according to the invention, having and zinc content of at least 5 ppm, comprising zinc-containing nanoparticles stabilised with biopolymers.

### SUMMARY OF THE INVENTION

According to a first aspect, the invention provides a food product which has been fortified in zinc, having zinc content of at least 5 ppm, comprising zinc-containing nanoparticles, wherein the nanoparticles are stabilised by means of a biopolymer.

According to a second aspect, there is provided an zinc containing additive for use in the food and other products according to the invention, in the form of an zinc-containing nanoparticles having a diameter of 5 - 1000 nanometer, wherein the nanoparticles are stabilised by means of a biopolymer.

According to a third aspect, there is provided a process for preparing the zinc-containing additive of the invention and according to a fourth aspect, there is provided a process for making the food product of the invention.

### DETAILED DESCRIPTION OF THE INVENTION

The invention regards a zinc-fortified food product having a zinc content of at least 5 ppm zinc (Zn). The food product comprises zinc in the form of zinc-containing biopolymer-stabilised nanoparticles. Nanoparticles are defined for the purpose of this invention as particles stabilised by the presence of protective biopolymer. They have a particle size of about 5 to 1,000 nanometer. The compositions of the invention contain biopolymer-stabilised zinc containing nanoparticles, which have an effective average particle size of less than about 1,000 nm. In a preferred embodiment of the invention, the biopolymer stabilised zinc containing nanoparticles have an effective average particle size of less than about 900 nm, preferably less than about 800 nm, less than about 700 nm, less than about 600 nm, less than about 500 nm, less than about 400 nm, less than about 300 nm, less than about 250 nm, less than about 200 nm, less than about 150 nm, less than about 100 nm, less than about 75 nm, or even less than about 50 nm.

The effective average particle size can be measured using techniques that are well known in the art, such as electron microscopy or light scattering techniques. The nanoparticles may be crystalline, polycrystalline or amorphous.

The zinc containing nanoparticles used in the present invention are stabilised by means of a biopolymer and their derivatives, such as, polyamides (e.g. proteins and poly(amino acids)), polysaccharides (e.g. cellulose, starch and xanthan), organic polyoxoesters synthesized by bacteria and eukaryotic organisms (e.g. poly(hydroxyalkanoic acids), poly(malic acid), polylactides, polyglycolide, polyanhydrides, polyesteramides and cutin), polythioesters, polyphosphate, polyisoprenoids (e.g. natural rubber or Gutta Percha), polyphenols (e.g. lignin or humic acids), and nucleic acids such as ribonucleic acids and deoxyribonucleic acids. The most preferred biopolymers are polyamides (protein and poly(amino acids)) and polysaccharides.

The polyamide (protein) source may be any specific type of protein, e.g. animal (collagens and gelatines), in particular dairy protein (casein, whey), or plant protein. The plan protein sources are for example soy, pea, amaranth, canola (rape), carob, corn, oat, potato, sesame, rice, wheat, lupin protein, or mixtures thereof. These proteins can be intact or partially hydrolysed, and can be used separately or in combination with each other. The preferred protein source is whey protein or soy protein.

The polysaccharide biopolymers that can be used as stabilisers include in particular polysaccharide gums. Preferred stabilisers are selected from the group of locust bean gum, tamarind seed polysaccharide, alginates, alternan, cellulose, hydroxypropyl-methylcellulose (anionic), cell wall polysaccharides from fungi, chitin, chitosan, curdlan, dextran, elsinan, emulsan, gellan, glycogen, glycopeptides, seed gums, hyaluronan, inulin, levan, lipopolysaccharides and other extracellular polysaccharides, peptidoglycans from archaea and bacteria, pectin, pullulan, schizophyllan, scleroglucan, succinoglycan, starch, teichoic acids, teichuronic acids and xanthan gum, guar gum, tara gum, gum arabic, kalaya gum, carrageenan, agar soybean polysaccharides and mixtures thereof. The preferred polysaccharide source is gum arabic.

One or more auxiliary non-polysacccharide stabilisers may be used in addition to the polysaccharide stabiliser(s). In particular, examples of auxiliary stabilisers are polyvinyl pyrrolidone, glycol alginate esters, methoxy pectin (HM-pectin), sodium carboxymethylcellulose (CMC-Na), propylene glycol alginate ester (PGA) and beet-derived pectin (BD-pectin), OSA starch. These may be used alone or in combination.

Incidentally, the biopolymer can be used together with other nonionic or negatively charged surfactants. It is desired that the surfactant is used so as to be contained in the mineral additive of the present invention in the range of from 0 to 20% by weight.

The amount of the biopolymer to be used may be generally about 0.01 to 10 wt.%, preferably 0.1 to 5 wt.%, and preferably around 1% wt. with respect to the total amount of non-dried product containing nanoparticles, but these ranges do not restrict the scope of the invention because they may vary depending on differences in the type of biopolymer and concentration of nanoparticles. The weight ratio of biopolymer to zinc-containing nanoparticles is generally at least about 1:10,000 or higher (e.g. more biopolymer in comparison to nanoparticle mass).

The advantages of using the biopolymer-stabilised zinc-containing nanoparticles according to the present invention are the excellent chemical stability in respect to interaction with other elements, oxidation, complexion activity, and colour change due to the low concentration of free zinc ions these than soluble zinc salts. Very importantly, due to the presence of stabilising biopolymer, these particles are compatible with many products containing other biopolymers.

Furthermore, due to their low chemical activity, the zinc containing nanoparticles according to the invention allow multiple fortification with vitamins, other minerals such as Ca, Fe, Mn, Mg, Cu, Se and other micro-nutrients.

Due to their very small particle size, the zinc containing nanoparticles according to the invention sediment very slowly on completely negligibly in comparison to large particles, which provides excellent physical stability of liquid and semi-liquid products.

In addition, the nanoparticles have excellent dispersibility in aqueous phases, including emulsions and gels, and in products comprising the same.

Due to their small particle size, the zinc containing nanoparticles according to the invention have a good bioavailability and bioacessability in comparison to large particles of the same compound.

Due to their small size and low solubility, these substances don not cause adverse organoleptic effects, such bad (bitter) taste, chalkiness and sandiness.

Furthermore, due to their small size, these substances do not have significant abrasion effect on the equipment.

The zinc-fortified food products of the present invention can be advantageously in the form of beverages, ice cream, (dry) soups, fat spreads, (yoghurt or protein) drinks, dressings or cereal products like bread.

A second aspect of the invention is an zinc-containing additive for use in the food or other products as zinc supplement according to any one of the preceding claims, in the form of zinc containing nanoparticles of zinc insoluble inorganic or organic salt, or mixtures thereof, and having a particle size of 5 to 1,000 nanometer, wherein the nanoparticles are stabilised by means of a biopolymer.

The zinc-containing additive preferably comprises a low-soluble salt having a Ks of 10⁻⁷ or less. By low soluble we mean a Ks, where Ks is the solubility product, of 10⁻⁷ or less.

The forms of the water-insoluble minerals generally include inorganic salts, organic salts, and the like. The inorganic salts include, for example, zinc oxide, hydroxide, carbonate, jodate, phosphates (e.g.Zn₃(PO₄)₂, Zn₂P₂O₇) or other inorganic insoluble zinc salts or mixtures thereof. Examples of organic low-soluble salts are zinc - partially hydrolysed proteins, zinc phytate or other sufficiently low soluble organic salts of zinc. Each of those inorganic salts can be used alone or in admixture of two or more salts.

More preferably, the low-soluble zinc salt is selected from the group of zinc oxide, hydroxide, carbonate, phosphates, more preferably pyrophosphate and zinc orthophosphate or mixtures thereof.

The zinc containing food product is prepared by mixing the zinc-containing additive as dispersed in liquid or dried form using a suitable mixing process known in the art.

The amount of zinc in the food product is at least 5 ppm zinc (Zn), but preferably it is at least 10, 20, 50, 100, 300, 500 or even 1,500 ppm.

According to another embodiment, the zinc-containing additive is prepared by chemical homogeneous or inhomogeneous precipitation in the presence of the biopolymer or a mixture of biopolymers. The precipitation can be achieved by fast mixing, using any suitable fast mixing process, of two solutions or (liquid-in-liquid, liquid-in-gas, gas-in-liquid, or solid-in-liquid or mixtures) dispersions containing zinc ions and counter ions that form insoluble zinc salt, respectively. The biopolymer can be present in either or in both phases. The pH of the final product can be from 2 to 12, preferably between 6 and 8 Preferably, the biopolymer is present in the system containing ions that do not interact strongly with the biopolymer.

The resulting zinc-containing biopolymer-stabilised nanoparticles can be separated from the mother liquid and dried e.g. using spray or freeze drying. Or the can be concentrated or directly dried together with the side products. Preferably, the side products should be Na, K or ammonium salts.

The resulting zinc-containing biopolymer-stabilised nanoparticles can be crystalline, polycrystalline or amorphous. In the preferred embodiment, the biopolymer-stabilised nanoparticles are amorphous or polycrystalline.

Finally, the additive according to the invention, comprising zinc-containing nanoparticles could be further utilized in a wide variety of fields such as cosmetics, animal feed additives, plant fertilizers, pharmaceutical products, personal and home care products.

The animal feeds containing the zinc-containing nanoparticles of the present invention include, for example, feeds for pets, domestic animals, cultured fishes, and the like.

Cosmetics containing the zinc-containing nanoparticles of the present invention include toothpaste, lotion; milky lotion; bathing agents; detergents such as cleansing agents; dentifrices, skin creams and the like. Zn-contaning nanoparticle can be used as antimicrobial agent and UV-absorber both in the product or in the packaging it self.

Industrial products containing the zinc-containing nanoparticles of the present invention include zinc-based catalysts, agricultural purposes, sheet materials for walls or floors, in packaging materials, additive to polymers and resins, inert filler, inflammable filler, for drug delivery, paper filler, water purification.

The invention will mow be further illustrated by means of the following, non-limiting examples.

### Example 1

### Whey protein stabilized zinc phosphate nanoparticles

A solution containing 0.02 M phosphate and 1% wt. whey protein isolate was prepared by dissolving sodium phosphate and whey protein isolate (Trade name: BiPro 95, manufactured by Danisco Food International) in demineralized water. A zinc solution containing 0.03M Zn was prepared by dissolution of zinc chloride in demineralized water.

The zinc solution was then quickly added the phosphate-whey protein solution prepared above with vigorous stirring. The pH of the resulting mixture was not further adjusted. The reaction self-terminated after several minutes after the formation of zinc phosphate nanoparticles - a white suspension that does not sediment for several hours was formed. The resulting reaction mixture was subjected to solid-liquid separation by centrifugation, to concentration, or to drying. The electron microscopy analyses revealed particle sizes of less than 1,000 nm. The resulting reaction mixture was subjected to solid-liquid separation by e.g. centrifugation, to concentration, or to drying.

To prepare Product I, the whey protein-stabilized zinc phosphate nanoparticles formed in the solid phase were collected and re-suspended in ion-exchanged water to give concentrated zinc phosphate slurry.

To prepare Product II, the entire reaction mixture was dried.

### Example 2

### Whey protein stabilized zinc carbonate nanoparticles

A solution containing 0.01M carbonate and 1% wt whey protein isolate was prepared by dissolving sodium carbonate and whey protein isolate (trade name: BiPro 95, manufactured by Danisco Food International) in demineralized water. A zinc solution containing 0.01M Zn was prepared by dissolution of zinc chloride in demineralized water.

The zinc solution was then quickly added the carbonate-whey protein solution prepared above with vigorous stirring. The pH of the resulting mixture was not further adjusted. The reaction self-terminated after several minutes after the formation white suspension of zinc carbonate nanoparticles that does not sediment for several hours. The electron microscopy analyses revealed particle sizes of less than 1,000 nm. The resulting reaction mixture was subjected to solid-liquid separation by centrifugation, to concentration, or to drying.

To prepare Product III, the whey protein-stabilized zinc carbonate nanoparticles formed in the solid phase were collected and then re-suspended in ion-exchanged water to give a concentrated zinc carbonate slurry.

To prepare Product IV, the entire reaction mixture was dried.

### Example 3

### Gum Arabic stabilized zinc phosphate nanoparticles

A solution containing 0.02M phosphate and 0.5% wt gum Arabic was prepared by dissolving sodium phosphate and Gum Arabic (manufactured by Sigma-Aldrich), in demineralized water. A zinc solution containing 0.03M Zn was prepared by dissolution of zinc chloride in demineralized water.

The zinc solution was then quickly added the phosphate-Gum Arabic solution prepared above with vigorous stirring. The pH of the resulting mixture was not further adjusted. The reaction self-terminated after several minutes after the formation of a white suspension of zinc phosphate nanoparticles that does not sediment for several hours. The electron microscopy analyses revealed particle sizes of less than 1,000 nm. The resulting reaction mixture was subjected to solid-liquid separation by centrifugation, to concentration, or to drying.

To prepare Product V the Gum Arabic-stabilized zinc phosphate nanoparticles formed in the solid phase were collected and the resulting complex was then re-suspended in ion-exchanged water to give a concentrated zinc phosphate slurry.

To prepare Product VI, the entire reaction mixture was dried.

### Example 4

### Gum Arabic stabilized zinc carbonate nanoparticles

A solution containing 0.01M carbonate and 0.5% wt gum Arabic was prepared by dissolving sodium carbonate and Gum Arabic (manufactured by Sigma-Aldrich) in demineralized water. A zinc solution containing 0.01M Zn was prepared by dissolution of zinc chloride in demineralized water.

The zinc solution was then quickly added to the carbonate-Gum Arabic solution prepared above with vigorous stirring. The pH of the resulting mixture was not further adjusted. The reaction self-terminated after several minutes after the formation of white suspension of zinc carbonate nanoparticles that does not sediment for several hours. The electron microscopy analyses revealed particle sizes of less than 1,000 nm. The resulting reaction mixture was subjected to solid-liquid separation by centrifugation, to concentration, or to drying.

To prepare Product VII, the Gum Arabic-stabilized zinc carbonate nanoparticles formed in the solid phase were collected, and the resulting complex was then re-suspended in ion-exchanged water to give a concentrated zinc carbonate slurry.

To prepare Product VIII, the entire reaction mixture was dried.

## Claims

1. Food product which has been fortified in zinc content, having an zinc content of at least 5 ppm, comprising zinc containing nanoparticles, wherein the nanoparticles are stabilised by means of a biopolymer.

2. Food product according to claim 1, wherein the nanoparticles comprise a low-soluble zinc salt having a Ks of 10⁻⁷ or less.

3. Food product according to claim 2, wherein said low-soluble zinc salts is an inorganic salt selected from the group zinc oxide, hydroxide, fluoride, carbonate, phosphates (e.g. Zn₃(PO₄)₂, Zn₂P₂O₇,) or other inorganic insoluble zinc salts or mixtures thereof.

4. Food product according to claim 2, wherein said low-soluble zinc salts is selected from the group consisting of organic low-soluble salts of zinc with partially hydrolysed proteins, phytate, organic acids, or other sufficiently low soluble organic salts of zinc.

5. Food product according to claim 1-4, comprising a mixture of inorganic and organic salts.

6. Food product according to any one claims 1-5, wherein the biopolymer is selected from the group of polyamides, polysaccharides, organic polyoxoesters synthesized by bacteria and eukaryotic organisms, poly(malic acid), polylactides, polyglycolide, polyanhydrides, polyesteramides and cutin, polythioesters, polyphosphate, polyisoprenoids, polyphenols, and nucleic acids.

7. Food product according to any one claims 1-5, wherein the biopolymer is a protein, a poly(amino acid), a polysaccharide or mixtures thereof.

8. Food product according to claim 7, wherein the biopolymer is a protein.

9. Food product according to claim 8, wherein the protein is selected from the group consisting of soy protein, whey protein and casein.

10. Food product according to claim 7, wherein the biopolymer is a polysaccharide, preferably a gum.

11. Food product according to any one of the preceding claims, the form of fat spread, a (protein) drink, an instant protein drink, a beverage or a dressing.

12. Zinc-containing additive for use in the food or other products according to any one of the preceding claims, in the form of zinc containing nanoparticles having a particle size of 5 to 1,000 nanometer, wherein the nanoparticles are stabilised by means of a biopolymer.

13. Zinc-containing additive according to claim 12, wherein the nanoparticles comprise a low-soluble zinc salt having a Ks of 10⁻⁷ or less.

14. Zinc-containing additive according to claim 13, wherein said low-soluble zinc salt is selected from the group consisting of low-soluble zinc inorganic salts selected from the group of zinc oxide, hydroxide, fluoride, carbonate, phosphates (e.g. Zn₃(PO₄)₂, Zn₂P₂O₇,) or other inorganic insoluble zinc salts or mixtures thereof.

15. Zinc-containing additive according to claim 13, wherein said zinc salt is selected from the group consisting of low-soluble zinc inorganic salts of organic such low-soluble salts of zinc with partially hydrolysed proteins, phytate, organic acids, or other sufficiently low soluble organic salts of zinc.

16. Zinc-containing additive according to claim 12-15, comprising a mixture of inorganic and organic salts.

17. Zinc-containing additive according to claim 12-16, wherein the biopolymer is selected from the group consisting of polyamides, polysaccharides, organic polyoxoesters synthesized by bacteria and eukaryotic organisms, poly(malic acid), polylactides, polyglycolide, polyanhydrides, polyesteramides and cutin, polythioesters, polyphosphate, polyisoprenoids, polyphenols and nucleic acids.

18. Zinc-containing additive according to claim 17, wherein the biopolymer is a protein.

19. Zinc-containing additive according to claim 18, wherein the protein is selected from the group consisting of soy protein, whey protein and casein.

20. Zinc-containing additive according to claim 12, wherein the biopolymer is a polysaccharide.

21. Zinc-containing additive according to claim 12, wherein said polysachcaride is selected from the group consisting of locust bean gum, tamarind seed polysaccharide, gellan gum, xanthan gum, guar gum, tara gum, gum arabic, kalaya gum, carrageenan, agar soybean polysaccharides and mixtures thereof.

22. Zinc-containing additive according to claim 12, further comprising an auxiliary non-polysaccharide stabilizer selected from the group consisting of glycol alginate esters, methoxy pectin (HM-pectin), sodium carboxymethylcellulose (CMC-Na), propylene glycol alginate ester (PGA), and beet-derived pectin (BD-pectin), starch, OSA starch or combinations thereof.

23. Process for preparing the food product according to any one of claims 1-11, comprising the steps of adding or mixing the zinc-containing additive in solid or dispersed form with the food products.

24. Zinc-containing additive according to claim 12-13, wherein the low-soluble zinc salt is obtained by a method for forming salts by homogeneous, heterogeneous or mixed precipitation and in the presence of a biopolymer.
